# EUROPÄISCHE PATENTANMELDUNG

(11) **EP 3 567 286 A1**
(43) Veröffentlichungstag der Anmeldung: **13.11.2019**
(21) Anmeldenummer: 19176081.8
(22) Anmeldetag: 24.11.2015
(51) Int. Cl.: F16J 15/48, F16J 15/02

(54) **FLACHDICHTUNG**

(30) Priorität: 24.11.2014 GB 201420818; 25.05.2015 DE 102015108205
(62) Teilanmeldung aus: 15195960.8
(71) Anmelder: Schneider, Thomas, 4434 Hoelstein (CH)
(72) Erfinder: Schneider, Thomas, 4434 Hoelstein (CH)
(74) Vertreter: Wolf, Michael

(57) **Zusammenfassung**

Die Erfindung betrifft eine Flachdichtung für ein Schließelement, das einem Innendruck ausgesetzt ist, der vom Atmosphärendruck abweicht, wobei sie einen Ringkörper mit sich gegenüberliegenden Kontaktflächen sowie außen- und innenliegenden umlaufenden Kanten umfasst, wobei jede Kontaktfläche mindestens ein nachgiebiges, gesondertes und ununterbrochenes Abdichtelement umfasst, wobei in der innenliegenden umlaufenden Kante eine radiale Nut ausgebildet ist, die sich ins Innere des Ringkörpers in Richtung der außenliegenden umlaufenden Kante erstreckt, wobei ihre Breite und Tiefe ausreichen, um dem Ringkörper die Fähigkeit zu verleihen, sich unter einem nicht-atmosphärischen Innendruck elastisch zu verformen, wobei sich die Nut bei Überdruck im Inneren des Schließelements öffnend ausgebildet ist. Nach der Erfindung ist vorgesehen, dass der Ringkörper aus einem elastomerartigen Material besteht, dass die radiale Nut schmal ist, nämlich, dass die Breite der Nut nicht mehr als 2 mm beträgt, dass sich die Nut (10) bei Unterdruck im Inneren des Schließelements verschließend ausgebildet ist.

## Beschreibung

Die Erfindung betrifft eine Flachdichtung gemäß dem Oberbegriff des Patentanspruchs 1.

Eine Flachdichtung der eingangs genannten Art ist aus dem Patentdokument US 2006/061047 A1 bekannt.

Die vorliegende Erfindung betrifft insbesondere ringförmige Flachdichtungen zur Verwendung beim Abdichten von sich gegenüberliegenden Flächen, wie insbesondere denjenigen von Luken in Reaktionsbehältern und von Flanschen zur Verbindung von Rohrleitungen.

Es entspricht der gängigen Vorgehensweise, eine ringförmige Flachdichtung zwischen verschließbaren, sich gegenüberliegenden Flächen einzufügen, wie insbesondere denjenigen von Luken in Reaktionsbehältern und von Rohrleitungen, welche mittels Schraubflanschen miteinander verbunden werden, wobei es sich insbesondere um Behälter und Rohrleitungen handelt, deren Inneres Drücken ausgesetzt ist, die höher oder niedriger als der Atmosphärendruck ist (in der nachfolgenden Beschreibung werden sämtliche derartige Verwendungen durch die Verwendung des Begriffs "Schließelement" abgedeckt). Derartige Flachdichtungen gleichen die unvermeidlichen Unregelmäßigkeiten in den sich gegenüberliegenden Flächen aus und stellen eine gute Abdichtung sicher. Sie haben die Form eines Rings, wobei dieser Begriff eine im Wesentlichen flache Einheit bezeichnet, die ein ununterbrochenes Materialstück umfasst, welches ein offenes Aufnahmeelement umgibt und begrenzt. Während derartige Ringe im Allgemeinen kreisförmig sind, ist dies jedoch nicht notwendigerweise so, und die Flachdichtungen können auch elliptische oder sogar geradlinige Figuren mit zweckmäßigerweise abgerundeten Ecken darstellen. Somit werden derartige Flachdichtungen im Allgemeinen zwei Kontaktflächen umfassen, die Grenzflächen mit den Oberflächen des Schließelements bilden, sowie zwei umlaufende Kanten, eine innere und eine äußere.

Das eigentliche Material der Flachdichtung kann ausreichend elastomerartig sein, um es zu ermöglichen, dass sich seine Form den gegenüberliegenden Flächen anpasst, oder es kann gesonderte elastomerartige Abdichtelemente, wie etwa O-Ringe, umfassen, wobei üblicherweise mindestens zwei solcher Elemente vorliegen, von denen mindestens eines mit der jeweils gegenüberliegenden Fläche in Kontakt ist.

Eine besondere Abdichtungsaufgabe stellt sich im Falle von sich gegenüberliegenden Flächen, bei welchen das Schließelement mit glasartigem Email beschichtet wurde, das heißt, dass es mit pulverförmigem und anschließend zum Schmelzen gebrachtem Glas beschichtet wurde, was häufig als "emailliert" bezeichnet wird. Dies ist insbesondere in einer aggressiven chemischen Umgebung von Vorteil, weshalb es sich großer Beliebtheit erfreut. Es geht damit allerdings das Problem einher, dass die sich gegenüberliegenden Flächen verhältnismäßig uneben und möglicherweise schwierig in angemessener Weise abzudichten sind, insbesondere wenn Drücke oder ein Vakuum angelegt werden.

Zu den Lösungen gemäß dem Stand der Technik gehören die Verwendung starker Schließ- oder Klemmkräfte, um die nachgiebigen Glieder dazu zu zwingen, ihre Form den Unregelmäßigkeiten der gegenüberliegenden Fläche(n) anzupassen, um diese abzudichten. Dies kann schwierig und zeitaufwändig sein, da es mit der Verwendung zahlreicher Verschraubungen und/oder Schließsysteme einhergeht. Darüber hinaus kann die starke Schließkraft die Gefahr mit sich bringen, dass die glasartige Emaillierung beschädigt wird (und somit das darunter befindliche Metall möglicherweise einer zersetzenden chemischen Umgebung ausgesetzt wird). Hinzu kommt, dass sie weiterhin die Lebensdauer der Flachdichtung erheblich verkürzen kann - eine Flachdichtung, die eine derartige Behandlung erfährt, muss möglicherweise bereits nach einer einzigen Verwendung ersetzt werden.

Gemäß einer neueren Entwicklung wurde eine Flachdichtung bereitgestellt, die einen Ring aus einem nachgiebigen Material umfasst, in welches eine umlaufende U-förmige Nut eingearbeitet ist, in die ein Federelement eingelegt ist. Diese eingebaute Nachgiebigkeit trägt dazu bei, dass der Bedarf an einer übermäßig starken Schließkraft abgemildert wird. Die Federelemente sind indes im Allgemeinen aus Metall, sodass sie möglicherweise gegenüber aggressiven chemischen Umgebungen nicht beständig sind. Darüber hinaus werden unterschiedliche Bauarten benötigt, in Abhängigkeit davon, ob die Flachdichtung einem erhöhtem Druck oder einem Vakuum ausgesetzt wird.

Der Erfindung liegt die Aufgabe zugrunde, eine Flachdichtung der eingangs genannten Art zu verbessern. Insbesondere soll eine noch besser abdichtende Flachdichtung geschaffen werden.

Diese Aufgabe ist mit einer Fachdichtung der eingangs genannten Art durch die im Kennzeichen des Patentanspruchs 1 aufgeführten Merkmale gelöst.

Genauer betrachtet, ist entdeckt worden, dass die oben genannte Aufgabe durch eine spezifische Flachdichtungsbauweise gelöst werden kann.

Es wird daher eine Flachdichtung für ein Schließelement bereitgestellt, das einem Innendruck ausgesetzt ist, der vom Atmosphärendruck abweicht, wobei sie einen Ringkörper aus elastomerartigem Material mit sich gegenüberliegenden Kontaktflächen sowie außen- und innenliegenden umlaufenden Kanten umfasst, wobei jede Kontaktfläche mindestens ein nachgiebiges ununterbrochenes Abdichtelement umfasst, wobei in der innenliegenden umlaufenden Kante eine schmale radiale Nut ausgebildet ist, die sich ins Innere des Ringkörpers in Richtung der außenliegenden umlaufenden Kante erstreckt, wobei ihre Breite und Tiefe ausreichen, um dem Ringkörper die Fähigkeit zu verleihen, sich unter einem nicht-atmosphärischen Innendruck elastisch zu verformen.

Weiterhin wird ein Verfahren zum Abdichten einer Grenzfläche zweier sich gegenüberliegender Elemente bereitgestellt, wobei zwischen diese eine Flachdichtung gemäß der Beschreibung im vorliegenden Schriftstück eingefügt wird und eine Abdichtkraft auf die Elemente ausgeübt wird.

Unter einem "Innendruck, der vom Atmosphärendruck abweicht" und einem "nicht-atmosphärischen Innendruck" ist zu verstehen, dass die Druckwerte innerhalb des Behälters oder der Rohrleitung entweder höher als der Atmosphärendruck sein können, oder niedriger, d. h. dass sie ein Teilvakuum darstellen können. Ein besonderes Eigenschaftsmerkmal der Flachdichtungen der vorliegenden Offenbarung besteht darin, dass sie in beiden Situationen wirken können.

Bei dem Ringkörper aus elastomerartigem Material kann es sich um ein beliebiges derartiges Material handeln, welches innerhalb des Fachgebietes bekannt ist und sich für eine Verwendung als Flachdichtungsmaterial eignet. Seine Beschaffenheit wird selbstverständlich von der jeweiligen Endverwendung abhängen, wobei der Fachmann dazu in der Lage sein wird, für jedweden Verwendungszweck ein geeignetes Material auszuwählen, beispielsweise ein Material, das hinsichtlich der Bedingungen in einem Reaktionsbehälter chemisch beständig ist.

Die sich gegenüberliegenden Kontaktflächen können eine beliebige Ausgestaltung aufweisen, die innerhalb des Fachgebietes bekannt ist. In einem einfachen Fall können sie eben und parallel sein, wobei sie möglicherweise mit beliebigen erforderlichen Anbauten oder mit Teilen ausgestattet sein können, die für eine bestimmte Anwendung zweckmäßig sind. Sie können beispielsweise kreisförmige Vorsprünge umfassen, die sich aus der Ebene der Flachdichtung erstrecken und dazu geeignet sind, in eine bestimmte Stelle zu passen, beispielsweise, eine bestimmte Rohrleitung oder Öffnung in einem Reaktionsbehälter. Weiterhin müssen sie nicht eben sein, sondern können in einer Querschnittsansicht kegelstumpfförmig sein und sich dazu eignen, mit einem bestimmte Aufnahmeelement oder Schließelement in zusammenzuwirken.

Unter "elastomerartig" ist zu verstehen, dass das Material für die Verwendungszwecke der Offenbarung ausreichend elastisch ist. Die Art dieser elastomerartigen Beschaffenheit wird in den nachfolgenden Absätzen ausführlicher beschrieben.

Viele Kunststoffmaterialien fallen in diese Kategorie. Ein besonderes Material ist PTFE, welches den Vorteil aufweist, dass es sowohl ausreichend elastisch ist als auch eine erhebliche chemische Reaktionsträgheit zeigt.

Bei den nachgiebigen ununterbrochenen Abdichtelementen kann es sich um beliebige geeignete Abdichtelemente handeln. Das am häufigsten antreffende Abdichtelement ist der O-Ring, ein torusförmiges Element, das meistens einen kreisförmigen Querschnitt zeigt, was aber nicht notwendigerweise so ist (zu den weiteren möglichen Querschnitten gehören quadratisch, trapezförmig und X-förmig). Obgleich in der nachfolgenden Beschreibung hauptsächlich auf O-Ringe Bezug genommen wird, versteht es sich, dass auch andere Arten von geeigneten Abdichtelementen, die innerhalb des Fachgebietes bekannt sind, abgedeckt werden.

Die nachgiebigen ununterbrochenen Abdichtelemente können durch beliebige zweckmäßige Mittel an den Kontaktflächen festgehalten werden. Sie können beispielsweise ganz einfach an die Kontaktfläche geklebt werden. Ein gebräuchlicheres Mittel besteht darin, dass sie in einer ununterbrochenen Kontaktflächennut mit geeignetem Haltequerschnitt gehalten werden. Somit kann das Abdichtelement, im Falle eines kreisförmigen Querschnitts, in einer Kontaktflächennut von trapezförmigem Querschnitt gehalten werden, wobei sich die schmalere Parallelseite des Trapezes auf der Kontaktfläche befindet und wobei ihre Abmessungen derart sind, dass das Abdichtelement in die Kontaktflächennut gepresst und dort festgehalten werden kann.

O-Ringe können aus einem beliebigen geeigneten Material gefertigt sein. Dessen Beschaffenheit wird weitgehend von der Endverwendung abhängen, wobei sie jedoch typischerweise aus einem chemisch beständigen nachgiebigen Material bestehen werden, typischerweise aus einem Fluorelastomer wie etwa VitonTM oder aus einem Silikon, und sie in ein fluoriertes Polymer wie etwa FEP oder PFA eingekapselt sind. Derartige O-Ringe sind handelsüblich und können beispielsweise von Freudenberg Process Seals & Co. GmbH & Co KG aus Weinheim, Deutschland, bezogen werden.

Die Größen der O-Ringe auf den beiden Kontaktflächen sind nicht im engeren Sinne von wesentlicher Bedeutung. Sie können gleich oder unterschiedlich sein und werden vollkommen von der jeweiligen Verwendung abhängen, für welche die Flachdichtung bestimmt ist. Im Allgemeinen wird auf jeder der Kontaktflächen ein O-Ring vorliegen, wobei es in einigen besonderen Anwendungen jedoch möglich und zulässig ist, mehr als einen O-Ring pro Kontaktfläche zu verwenden. In ähnlicher Weise werden die Querschnittsdurchmesser der O-Ringe von der Art der Anwendung bestimmt, und sie können gemäß einer Vorgehensweise gewählt werden, die innerhalb des Fachgebietes üblich ist.

Die innenliegende umlaufende Kante des Ringkörpers ist mit einer schmalen radialen Nut versehen, die sich ins Innere des Ringkörpers in Richtung der außenliegenden umlaufenden Kante erstreckt. Sie wird nachstehend als die "Ausgleichsnut" bezeichnet. Unter "schmal" ist zu verstehen, dass die Breite der Ausgleichsnut erheblich geringer als die Tiefe ihrer Erstreckung in den Ring ist.

Das Vorhandensein dieser Ausgleichsnut und ihre Fähigkeit, sich zu öffnen oder zu schließen, je nachdem, ob der Druck, welcher von dem Schließelement aufrechterhalten wird, höher oder niedriger als der Atmosphärendruck ist, stellen das grundlegende Funktionsprinzip der vorliegenden Flachdichtung dar. Es stellt sicher, dass selbst bei verhältnismäßig geringen Schließkräften die abdichtende Wirkung des Abdichtelementes nicht beeinträchtigt wird.

Die Beschaffenheit und die Abmessungen der Ausgleichsnut sind von wesentlicher Bedeutung für die Funktion der Flachdichtung der vorliegenden Offenbarung. Dadurch wird es ermöglicht, dass die Flachdichtung sich verformen kann, um sich sowohl Schließkräften als auch von innen wirkenden Drücken oder Unterdrücken anzupassen, und dass sie eine wirksame Abdichtwirkung aufrechterhält, ohne übermäßig starke Schließkräfte zu benötigen.

Der Ausdruck "elastisch verformen" bedeutet, dass die Ausgleichsnut zumindest teilweise wieder ihre ursprünglichen Abmessungen einnehmen wird, wenn die Schließkraft nicht mehr einwirkt oder der Druck verringert wird. Es ist nicht erforderlich, dass sie ihren ursprünglichen Zustand zu 100% wieder annimmt. Während es zwar möglich ist, dass die Öffnung der Ausgleichsnut bei der Verwendung vollständig geschlossen ist (dies wird unter Bedingungen verminderten Innendrucks passieren, wenn die Schließelemente unter Einwirkung des Atmosphärendrucks zusammengepresst werden), ist es von wesentlicher Bedeutung, das diese Öffnung zumindest teilweise wieder ihre ursprüngliche Breite einnimmt, wenn die Schließkraft nicht mehr einwirkt.

Die folgenden Faktoren werden die Abmessungen der Ausgleichsnut bestimmen:
- Durchmesser und Dicke des Ringkörpers,
- Druck, der auf die Flachdichtung ausgeübt werden soll,
- Beschaffenheit des Ringkörpermaterials,
- Beschaffenheit der nachgiebigen Abdichtelemente.

Die Tiefe der Ausgleichsnut ist derart, dass eine ausreichende elastische Verformung erfolgen kann, wobei sie andererseits nicht so tief ist, dass der Ringkörper zerbrechen könnte oder sein Zusammenhalt gefährdet würde. Darüber hinaus sollte die Tiefe der Ausgleichsnut in dem Ringkörper die Erstreckung mindestens eines der nachgiebigen Abdichtelemente auf einer Kontaktfläche übertreffen, wobei sie in einer besonderen Ausführungsform tiefer als sämtliche dieser Elemente ist. Im besonderen Fall eines kreisförmigen O-Rings auf beiden Kontaktflächen wird somit der Durchmesser des Grundes der Ausgleichsnut größer als mindestens ein O-Ring-Durchmesser sein, und insbesondere größer als beide O-Ring-Durchmesser, falls diese unterschiedlich sind.

Allgemein ausgedrückt wird sich die Ausgleichsnut typischerweise über mehr als 50% der Breite des Ringkörpers in den Ringkörper erstrecken, insbesondere über 60 bis 80% der Breite.

Die tatsächliche Breite der Ausgleichsnut wird erheblich schmaler als ihre Tiefe sein. Während hinsichtlich der Breite der Ausgleichsnut kein endgültiger Grenzwert festgelegt werden kann, da diese von den oben genannten Faktoren abhängen wird, so wird diese unter keinen Umständen mehr als 2 mm betragen. Allgemein ausgedrückt, wird die Breite der Ausgleichsnut zwischen 0,1 und 2 mm, insbesondere 0,4 und 1 mm, betragen und ganz besonders 0,4 bis 0,8 mm.

Bei der Auswahl der Abmessungen der Ausgleichsnut besteht eine weitere Erwägung darin, dass die Abdichtelemente ausreichend stark zusammengepresst werden müssen, um das angestrebte Ausmaß an Abdichtung zu bewirken. Diesbezüglich besteht eine Abhängigkeit von der Beschaffenheit des Abdichtelements und der jeweiligen Verwendung, wobei der Fachmann jedoch auf einfache Weise bestimmen kann, wie stark dies im jeweiligen Fall geschehen muss, um die Wirkung zu erzielen. Somit muss die Flachdichtung insgesamt über Abdichtelemente verfügen, deren Kompression ausreicht, um das Abdichten zu bewirken, wobei die Ausgleichsnut jedoch zumindest teilweise offen bleiben muss, damit sich der Ringkörper unter Einwirkung der Drucks oder des Vakuums, dem er ausgesetzt ist, ausdehnen oder zusammenziehen kann. Ein Fachmann vermag die relativen Größen und Abmessungen der verschiedenartigen Elemente routinemäßig zu bestimmen.

Die Ausgleichsnut kann vollkommen eben sein, das heißt, dass die gesamte Nut, von der innenliegenden umlaufenden Kante bis zu ihrer am weitesten innenliegenden Erstreckung in ein- und derselben Ebene liegen kann. In einer besonderen Ausführungsform kann die Ausgleichsnut indes kegelstumpfförmig ausgebildet sein, das heißt, dass die Nut in Querschnittsansicht eine Form bildet, die einem Kegelstumpf entspricht. Dieses Eigenschaftsmerkmal kann beispielsweise zweckmäßigerweise dazu verwendet werden, Flüssigkeiten, die sich in einem Reaktionsbehälter befinden, wieder in den Behälter zurückzuführen, sodass diese nicht zurückgehalten werden. Es kann weiterhin zur Anwendung kommen, wenn ein Aufnahmeelement in einem Behälter eine Winkelstellung zwischen der Horizontalen und der Vertikalen aufweist - eine geeignete Winkelstellung der Nut wird es ermöglichen, das Material in den Behälter abzuleiten. In einem derartigen Falle ist üblicherweise zumindest eine Kontaktfläche des Ringkörpers ebenfalls kegelstumpfförmig.

Die oben beschriebene Flachdichtung ist ohne Schwierigkeiten unter Verwendung bekannter Techniken und Materialien herzustellen. Ein Fachmann mit durchschnittlichen Fachkenntnissen kann ohne Schwierigkeiten sämtliche Parameter bestimmen, die erforderlich sind, damit diese ordnungsgemäß funktioniert. Bei ihrer Verwendung ist die Flachdichtung einfach anzubringen und zeigt eine hochwirksame Abdichtung, sogar bei emaillierten Behältern und Rohrleitungen. Darüber hinaus benötigt sie dazu keinerlei aufwändige Verbindungsstücke oder extreme Schließdrücke, sodass sie einfach in der Anwendung ist. Hinzu kommt, dass sie für Behälter verwendet werden kann, die unter erhöhten wie auch unter vermindertem Druck stehen können, sodass keine Notwendigkeit für verschiedenartige Flachdichtungen oder Schließelemente besteht. Weiterhin bedeutet die Abwesenheit jedweder Metallteile wie etwa Federn, dass aggressive chemische Umgebungen kein Problem darstellen.

Sie ist für eine Verwendung mit schnellschließenden Verbindungsstücken, wie etwa demjenigen, welches in der deutschen Offenlegungsschrift DE 10 2007 030 348 A1 beschrieben ist, besonders gut geeignet.

Andere vorteilhafte Weiterbildungen der erfindungsgemäßen Flachdichtung ergeben sich aus den abhängigen Patentansprüchen.

Die erfindungsgemäße Flachdichtung einschließlich ihrer vorteilhaften Weiterbildungen gemäß der abhängigen Patentansprüche wird nachfolgend anhand der zeichnerischen Darstellung verschiedener Ausführungsbeispiele näher erläutert, welche in keinerlei Weise als einschränkend aufzufassen sind.

Es zeigt jeweils im Schnitt
- Figur 1: ist ein Querschnitt einer ringförmigen Flachdichtung gemäß der obigen Beschreibung; und
- Figur 2: ist ein Querschnitt einer Seite einer weiteren ringförmigen Flachdichtung gemäß der obigen Beschreibung.

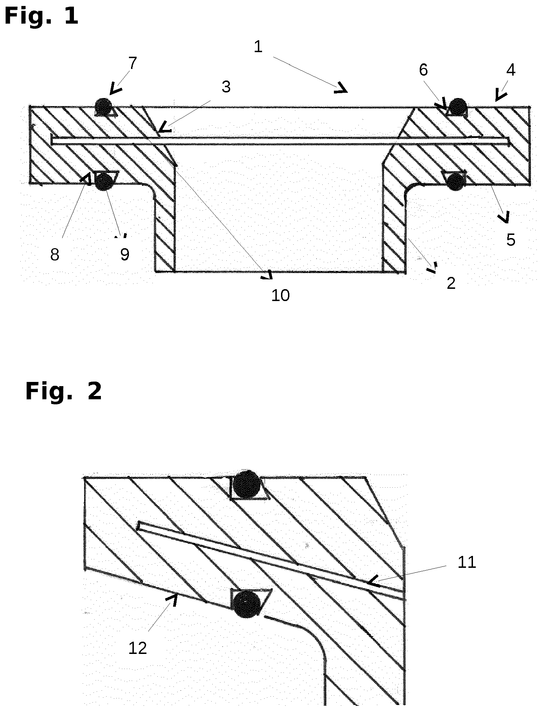

In Figur 1 weist eine ringförmige Flachdichtung 1, die dazu geeignet ist, in ein Aufnahmeelement eines Reaktionsbehälters zu passen, die Form eines Ringkörpers aus PTFE auf, wobei sich unterhalb derselben eine ringförmige Randleiste 2 erstreckt und derart ausgelegt ist, dass sie in das Aufnahmeelement passt. Der Ringkörper hat eine Fläche 3, die derart abgeschrägt ist, dass sie zu einer Luke passt, welche das Aufnahmeelement schließt. Er hat zwei ebene Kontaktflächen 4 und 5. Aus der Kontaktfläche 4 wurde eine kreisförmige Nut 6 mit trapezförmigem Querschnitt ausgeschnitten, deren schmaleres Ende sich auf Höhe der Fläche befindet. Sie ist dafür geeignet, einen O-Ring 7 aus FEP/PFA-beschichtetem VitonTM-Elastomer aufzunehmen und an Ort und Stelle zu halten. Die Kontaktfläche 5 weist eine ähnliche Nut 8 und einen O-Ring 9 auf.

Aus der innenliegenden umlaufenden Kante 8 des Rings wurde eine Ausgleichsnut 10 ausgeschnitten. Sie ist 1 mm breit und erstreckt sich in den Körper des Rings, über 80% der Breite des Rings.

Bei ihrer Verwendung wird die Flachdichtung in das Aufnahmeelement eines Reaktionsbehälters eingepasst und die Abdeckung geschlossen. Die Ausgleichsnut 10 ermöglicht die elastische Verformung der Flachdichtung. Wenn der Druck in dem Behälter niedriger als der Atmosphärendruck ist, wird die geringfügige Verformung des Aufnahmeelements und des Behälters, welche durch den Atmosphärendruck verursacht wird, die Ausgleichsnut verschließen, und wenn der Druck in dem Behälter höher als der Atmosphärendruck ist, wird sie dazu neigen, sich zu öffnen. Während dieser Vorgänge bleibt die abdichtende Wirkung der O-Ringe 7 und 9 erhalten. Dadurch wird eine lückenlose Abdichtung des Aufnahmeelements sichergestellt, ohne dass ein übermäßiger und möglicherweise schädigend wirkender Druck erforderlich ist.

In Figur 2 weist die Nut 11 unter Bezugnahme auf die Zeichnung eine nach unten gewandte Winkelstellung auf. Dadurch kann jedwede Flüssigkeit, die in einem Reaktionsbehälter aufgefangen wurde, in die Behälter abgeleitet werden. Die nach unten gewandte Kontaktfläche 12 hat ein entsprechendes Profil.

### Bezugszeichenliste

- 1: Flachdichtung
- 2: Randleiste
- 3: Fläche
- 4: Kontaktfläche
- 5: Kontaktfläche
- 6: Nut
- 7: Ring
- 8: Nut
- 9: Ring
- 10: Ausgleichsnut
- 11: Nut
- 12: Kontaktfläche

## Patentansprüche

1. Flachdichtung (1) für ein Schließelement, das einem Innendruck ausgesetzt ist, der vom Atmosphärendruck abweicht, wobei sie einen Ringkörper mit sich gegenüberliegenden Kontaktflächen (4, 5) sowie außen- und innenliegenden umlaufenden Kanten umfasst, wobei jede Kontaktfläche (4, 5) mindestens ein nachgiebiges, gesondertes und ununterbrochenes Abdichtelement (7, 9) umfasst, wobei in der innenliegenden umlaufenden Kante eine radiale Nut (10) ausgebildet ist, die sich ins Innere des Ringkörpers in Richtung der außenliegenden umlaufenden Kante erstreckt, wobei ihre Breite und Tiefe ausreichen, um dem Ringkörper die Fähigkeit zu verleihen, sich unter einem nicht-atmosphärischen Innendruck elastisch zu verformen, wobei sich die Nut (10) bei Überdruck im Inneren des Schließelements öffnend ausgebildet ist,
**dadurch gekennzeichnet,**
**dass** der Ringkörper aus einem elastomerartigen Material besteht, dass die radiale Nut schmal ist, nämlich, dass die Breite der Nut nicht mehr als 2 mm beträgt, dass sich die Nut (10) bei Unterdruck im Inneren des Schließelements verschließend ausgebildet ist.

2. Flachdichtung nach Anspruch 1, bei welcher die Tiefe der Nut (6, 8) in dem Ringkörper die Erstreckung mindestens einer der nachgiebigen Abdichtelemente (7, 9) auf einer Kontaktfläche (4, 5) übertrifft, wobei sie insbesondere die Erstreckung sämtlicher Abdichtelemente übertrifft.

3. Flachdichtung nach Anspruch 1, bei welcher die Breite der Nut (10) zwischen 0,1 und 2 mm, insbesondere 0,4 und 1 mm, beträgt, insbesondere 0,4 bis 0,8 mm.

4. Flachdichtung nach Anspruch 1, bei welcher das Ringkörpermaterial, die Abdichtelemente (7, 9) und die Abmessungen der Nut (10) derart gewählt werden, dass bei der jeweiligen Verwendung eine ausreichende Abdichtwirkung im Bereich der Abdichtelemente (7, 9) erzielt wird, wobei die Nut (10) jedoch zumindest teilweise offen bleibt.

5. Flachdichtung nach Anspruch 1, bei welcher die Nut (10) eben oder bei welcher die Nut (11) im Querschnitt kegelstumpfförmig ist.

6. Verfahren zum Abdichten einer Grenzfläche zweier sich gegenüberliegender Elemente, wobei zwischen diese eine Flachdichtung gemäß der obigen Ansprüche 1 bis 5 eingefügt und eine Abdichtkraft auf die Elemente ausgeübt wird.
